# EUROPEAN PATENT SPECIFICATION

(11) **EP 3 273 423 B1**
(45) Date of publication and mention of the grant of the patent: **13.03.2019**
(21) Application number: 16465521.9
(22) Date of filing: 21.07.2016
(51) Int. Cl.: G08G 1/16, B60K 31/00, B60W 10/00

(54) **DEVICE AND METHOD FOR A VEHICLE FOR RECOGNIZING A PEDESTRIAN**
VORRICHTUNG UND VERFAHREN ZUR ERKENNUNG EINES FUSSGÄNGERS
DISPOSITIF ET PROCÉDÉ POUR UN VÉHICULE PERMETTANT DE RECONNAÎTRE UN PIÉTON

(43) Date of publication of application: 24.01.2018
(73) Proprietor: Continental Automotive GmbH, 30165 Hannover (DE)
(72) Inventor: Danciu, Alin-Mircea, 550169 Sibiu (RO)
(74) Representative: Reuter, Andreas

(56) References cited:
- US-A1- 2010 045 482
- US-A1- 2016 016 560
- US-B2- 8 164 432

## Description

### FIELD OF THE INVENTION

The present invention relates to technologies for enhanced pedestrian protection by means of situation analyses. In particular, the present invention relates to a device and a method for a vehicle for recognizing a pedestrian who is crossing a street and who might be hidden by a vehicle. Furthermore, the present invention relates to a vehicle comprising the aforementioned device.

### BACKGROUND OF THE INVENTION

Known pedestrian protection technologies of a vehicle rely on recognition of a pedestrian as an object, calculating a distance and a speed relative to the car and deciding on the probability of a collision. Detecting respectively recognising the pedestrian can be done by use of sensors or a combination of sensors. However, if the pedestrian is obscured by another car, a detection of the pedestrian is not possible or is done very late. As a result, a protection of the pedestrian is almost not existing because there is very little distance available for a braking action of the vehicle. A device for detecting pedestrians, in particular if they appear behind a car, is known from US-B2-8164432.

### SUMMARY OF THE INVENTION

It is an object of the present invention to provide technologies for enhanced pedestrian protection by means of situation analyses, wherein a pedestrian who might be obscured by another vehicle can be recognized.
The problem is solved by the subject matter according to the independent claims. The dependent claims, the following description and the drawings show preferred embodiments of the invention.

According to a first aspect of the invention a device for a vehicle for recognizing a pedestrian is provided. The device comprises a sensor or at least one sensor for a first vehicle, e.g. a car, a bus, a truck, a bike or a motorcycle, and a control unit for the first vehicle. The sensor can be disposed in a front region of the vehicle, such that the sensor can scan an area in front of the car (where a pedestrian can be detected) as well as an area laterally of the vehicle (where a second car can be detected on an adjacent lane). The control unit can be communicatively connected to a driver assistance system or be a part of the latter. Also, the control unit can be a part of the sensor (s) of the first vehicle.

The sensor is adapted for detecting and tracking a second vehicle or at least one second vehicle, e.g. a car, a bus a truck, a bike or a motorcycle, on a second lane of a street and for transmitting respective information to the control unit, if the first vehicle is driving on a first lane of the street, wherein the first lane runs adjacent to the second lane. Particularly, the first lane and the second lane are intended to be used in the same direction, in other words, the first vehicle and the second vehicle are driving in the same direction on the first lane respectively the second lane.

Also, the sensor is adapted for recognizing a stopping action of the second vehicle and for transmitting respective information to the control unit. Such a recognition or detection can e.g. be done by measuring the velocity and/or the acceleration of the second car by respective means. The term "stopping action of the second vehicle" can e.g. include a braking action of the second vehicle. Furthermore the term can also include the state, where the second vehicle has already stopped after a braking action, e.g. where the vehicle has stopped in front of a traffic light, a junction or a pedestrian crossing such as a crosswalk, where a car is standing or parking on the second lane of where a bus has stopped at a bus stop.

Furthermore, the sensor is adapted for recognizing a pedestrian crossing of the street in front of the first vehicle, e.g. a crosswalk, and for transmitting respective information to the control unit. The recognition of the pedestrian crossing can e.g. be done by a camera, a laser unit or a LiDAR unit.

The control unit is adapted for correlating the information received by the sensor and for recognizing that the second vehicle might obscure a pedestrian on the detected pedestrian crossing of the street in front of the first vehicle. For example, the second vehicle can be located between the sensor (s) of the first car and the pedestrian crossing of the street, such that the pedestrian crossing cannot be detected entirely and a pedestrian walking on the pedestrian crossing might not be detected by the sensor (s) of the first vehicle. In this situation, the pedestrian crossing will not fully be in a field of view of the sensor of the first car because the second car is obstructing the field of view of the sensor(s) at least partly.

Furthermore, the control unit is adapted for generating a warning signal to a driver of the first vehicle, if the control unit has recognized that the second vehicle might obscure a pedestrian on the detected pedestrian crossing of the street in front of the first vehicle. Such a warning signal can e.g. be an optical warning on a display of the first car or an audio signal. The warning signal can draw the attention of the driver of the first vehicle on the pedestrian crossing and, thereby, help to improve recognition and safety for pedestrians who might be hidden behind a second vehicle.

The device according to the first aspect of the present invention solves a common problem, where the second vehicle on the adjacent lane of the first car has stopped or is stopping in order to give way to a crossing pedestrian (e.g. at a crosswalk) and in doing so it obscures a field of view of the sensor (s) of the first car. Typically a distance between the second car and the pedestrian will be too short to allow a separation of the crossing pedestrian from the second car by sensors, e.g. by radar target separation. The device according to the present invention greatly improves the performance of the pedestrian protection function in obscured situations respectively scenarios, which are very common in city traffic and are very difficult to handle by means of direct pedestrian detection.

According to an embodiment the control unit is adapted for initiating a brake action of the first vehicle, if the control unit has recognized that the second vehicle might obscure a pedestrian on the detected pedestrian crossing of the street in front of the first vehicle. Such a brake can particularly be a "light brake" , which can be issued autonomously to decelerate the vehicle in order to allow more time (and distance) for a full brake if that will become necessary in the immediate future, especially when a driver of the first vehicle does not react on the warning signal generated by the device. An initiation of the brake action (whether or not; intensity) can be done depending on a remaining distance to the recognized pedestrian crossing and whether or not the driver of the first vehicle has reacted on the warning signal generated by the control unit.

All functions of the sensor of the first vehicle can easily be realized with a camera, e.g. a digital camera, of the sensor. Furthermore, the sensor of the first vehicle can additionally comprise a LiDAR element or a radar element. Theses additional sensor elements can be used particularly for the above described detection and tracking of the second car on the second lane or a detection of a pedestrian in front of the first vehicle.

According to another embodiment, the sensor is further adapted for detecting a pedestrian who is crossing the street in front of the first vehicle and the control unit is further adapted for extrapolating a future movement of the detected pedestrian while the pedestrian might be obscured by the second vehicle. Particularly, the sensor can be adapted for detecting the pedestrian prior to detecting and tracking the second vehicle. This embodiment enables that a pedestrian that has been detected, in particular by use of a long range sensor (e.g. a radar unit) prior to a possible obstruction of the field of view of the sensor(s) by the second vehicle, can be requalified faster by means of extrapolating the movement of the pedestrian while he might be in the region of the obscured field of view. This can further enhance the performance of the pedestrian protection function.

According to a second aspect of the invention, a vehicle comprises a device according to the first aspect of the invention.

According to a third aspect of the invention a method for recognizing a pedestrian crossing a street is provided. The method starts with providing a first vehicle according to the second aspect of the invention.

In step (1) a second vehicle is detected and tracked on a second lane of a street and respective information is transmitted to the control unit of the device of the first vehicle, if the first vehicle is driving on a first lane of the street, wherein the first lane runs adjacent to the second lane. In step (2) a stopping action of the second vehicle is recognized and respective information is transmitted to the control unit. In step (3) a pedestrian crossing of the street in front of the first vehicle is recognized and respective information is transmitted to the control unit.

By use of the control unit the information received in steps (1) to (3) is correlated and it is recognized, that the second vehicle might obscure a pedestrian on the detected pedestrian crossing of the street in front of the first vehicle. Furthermore, a warning signal to a driver of the first vehicle is generated by use of the control unit, if the control unit has recognized that the second vehicle might obscure a pedestrian on the detected pedestrian crossing of the street in front of the first vehicle.

According to an embodiment, the method further comprises the step of initiating a brake action of the first vehicle by use of the control unit, if the control unit has recognized that the second vehicle might obscure a pedestrian on the detected pedestrian crossing of the street in front of the first vehicle.

According to another embodiment the method further comprises the steps of detecting by use of the sensor a pedestrian who is crossing the street in front of the first vehicle prior to the detection and tracking the second vehicle, and extrapolating by use of the control unit a future movement of the detected pedestrian while the pedestrian might be obscured by the second vehicle.

Regarding additional effects, advantages and beneficial embodiments of the method - to avoid repetitions - it is referred to the explanations regarding the device according to the present invention. These and other aspects of the invention will be apparent from and elucidated with reference to the embodiments described hereinafter.

### BRIEF DESCRIPTION OF THE DRAWINGS

In the following description exemplary embodiments of the invention are explained with reference to the accompanying schematic drawing in which
- Fig 1: shows a side view of a first car in accordance with an embodiment of the invention and
- Fig. 2: shows a top view of a street with two adjacent lanes, wherein a first car is driving on one of the lanes and is detecting a pedestrian on a crosswalk and
- Fig. 3: shows a top view of the street as per Fig. 2, wherein a second car obstructs a field of view of sensors of the first car.

### DETAILED DESCRIPTION OF EXEMPLARY EMBODIMENTS

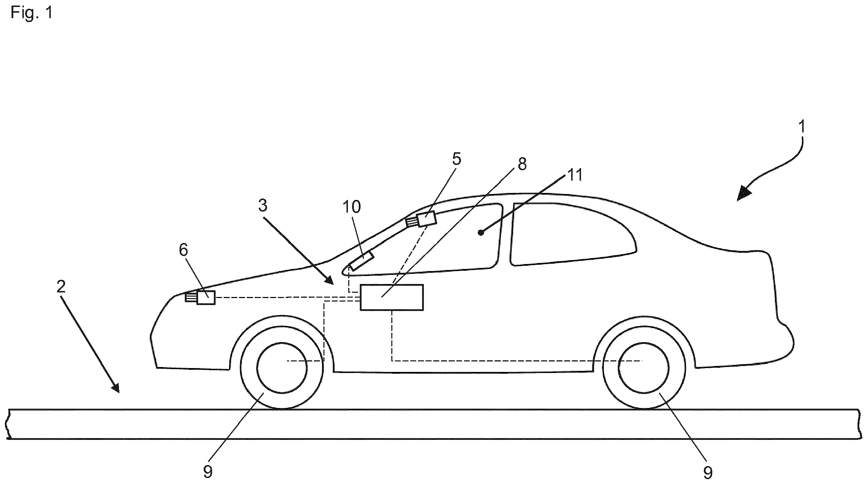

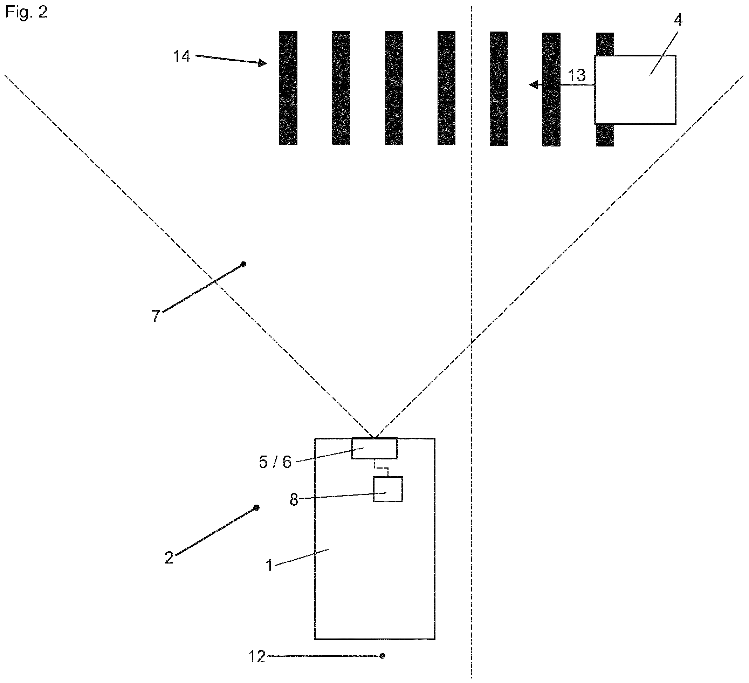

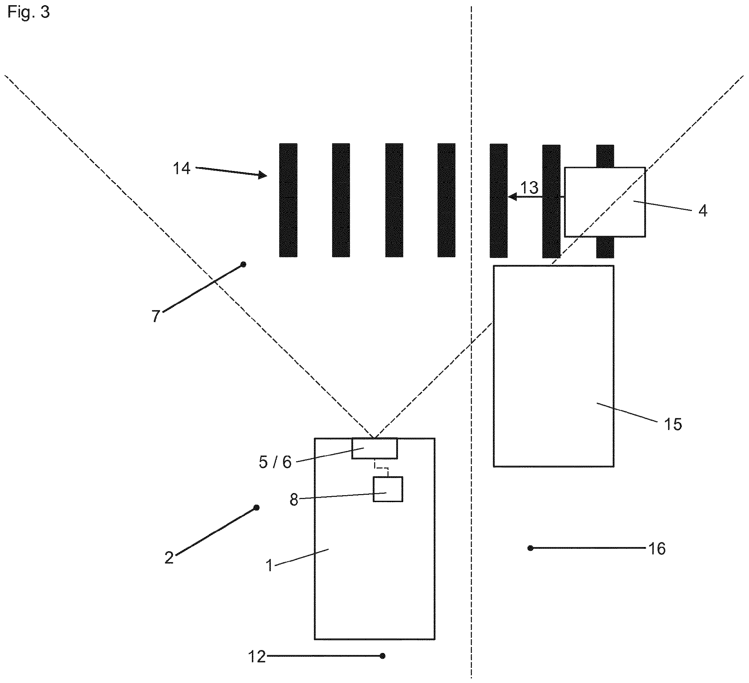

Fig. 1 shows a first vehicle in form of a first car 1 which is driving on a street 2. The first car 1 comprises a device 3 for recognizing a pedestrian 4 (see Figs. 2 and 3) who is crossing the street 2 in front of the first car 1. The device 3 comprises a first sensor in the form of a camera 5, which is disposed in the area of a front windshield of the first car 1, and a second sensor in the form of a radar unit or a LiDAR unit 6, which is disposed at the front of the first car 1. Both sensors 5 and 6 are adapted to capture a sector 7 (see Fig. 2) in the environment of the first car 1. The device 3 further comprises a control unit 8 which particularly can control sensors 5 and 6 and receive measurement data from sensors 5 and 6. The control unit 8 is also connected to brakes (not shown) of the wheels 9 of the first car 1, such that the control unit 8 can initiate a brake of the first car 1. Furthermore, the control unit 8 is connected to a display unit 10 in the interior 11 of the first car 1. The display unit 10 lies within a field of view of a driver driving the first car 1 and the control unit can 8 initiate or generate a warning signal visible on the display unit 10.

Fig. 2 shows a first vehicle in the form of a first car 1 (which can be the first car 1 as shown in Fig. 1) driving on a street 2 (which can be the street 2 as shown in Fig. 1). The first car 1 is driving on a first lane 12 of the street 2, which is shown left in Fig. 2. While driving, a long range sensor, e.g. a radar unit 6 (such as shown in Fig. 1), of the first car 1 is detecting a pedestrian 4 who is crossing the street 2 (in the direction as indicated by arrow 13) in front of the first car 1. The camera 5 (such as shown in Fig. 1) of the first car 1 detects that the pedestrian 4 crosses the street 2 on a pedestrian crossing in the form of a crosswalk 14. The camera 5 and the radar unit 6 transmit information data to the control unit 8, wherein the transmitted information data represent that a pedestrian 4 has been detected, who is crossing the street 2 in front of the first car 1 on a crosswalk 14. The control unit 8 receives and stores the information transmitted by the camera 5 and the radar unit 6 in a memory (not shown) of the control unit 8. Additionally, the speed and walking direction of the pedestrian 4 can also be detected by sensors 5 and 6 which can transmit respective information to the control unit 8 for storing in the memory unit.

As the first car 1 is driving further on the street 2 it becomes closer to the crosswalk 14 which the pedestrian 4 is still crossing. A second vehicle in the form of a second car 15 is driving on a second lane 16 of the street 2, which is shown right in Fig. 3. The second lane 16 runs adjacent to the first lane 12. The second car 15 is driving in the same direction as the first car 1, i.e. the direction towards the crosswalk 14. While driving, at least one of the sensors 5 and 6 (Fig. 1) of the first car 1 is detecting and tracking the second car 15 on the second lane 16 of the street 2 and transmits respective information to the control unit 8.

As shown in Fig. 3, the second car 15 has stopped right in front of the crosswalk 14 in order to give way to the pedestrian 4. At least one of the sensors 5 and 6 of the first car 1 has detected that the second car 15 has stopped and has transmitted respective information to the control unit 8. As shown in Figs. 2 and 3, the pedestrian 4 lies at least partly within the captured sector 7 of the sensors 5 and 6 of the first car 1, such that under normal circumstances the pedestrian 4 could have been detected by sensors 5 and 6. However, in the situation shown in Fig. 3, the second car 15 obstructs or obscures the pedestrian 4 in the field of view respectively the captured sector 7 of the sensors 5 and 6 of the first car 1. In this situation, the camera 5 cannot detect the pedestrian 4. Additionally, the pedestrian 4 is as close to the second vehicle, such that the radar unit or LiDAR unit 6 of the first car cannot separate the pedestrian 4 from the second car 15.

The control unit 8 correlates the received information representing the stopping action of the second car 15 and the crosswalk 14 in front of the first car 1 and - as a result - recognizes respectively concludes that a pedestrian 4 - although not detected by sensors 5 and 6 - is crossing the street 2 in front of the first car 1 on the crosswalk 14. Additionally, the pedestrian 4 has already detected prior to detecting the second car 2 as described with respect to Fig. 2. The control unit 8 is adapted for extrapolating a movement of the pedestrian 4 while he is obscured by the second car 15. Such an extrapolation can be used to requalify faster that there is or might be a pedestrian 4 obscured by the second car 15.

As soon as the control unit 8 has recognized that there is a crosswalk 14 of the street 2 in front of the first car 1, it generates or initiates a respective visual warning visible on the display unit 10. In the situation as shown by Fig. 3 the first car 1 is already quite near the crosswalk 4. The remaining distance to the crosswalk 14 can be determined e.g. by measurements of the sensors 5 and 6 or data from a navigation system (not shown) . The control unit 8 can - besides initiating the warning signal - also initiate a light brake of the first car 1 by controlling its brakes of the wheels 9 accordingly. The intensity can depend, e.g. on the remaining distance to the crosswalk 14 and whether or not the driver of the first car 1 has reacted on the warning signal.

## Claims

1. Device (3) for a vehicle (1) for recognizing a pedestrian (4) comprising:
- a sensor (5, 6) for a first vehicle (1), and
- a control unit (8) for the first vehicle (1),
wherein the sensor (5, 6) is adapted
- for detecting and tracking a second vehicle (15) on a second lane (16) of a street (2) and for transmitting respective information to the control unit (8), if the first vehicle (1) is driving on a first lane (12) of the street (2), wherein the first lane (12) runs adjacent to the second lane (16),
- for recognizing a stopping action of the second vehicle (15) and for transmitting respective information to the control unit (8),
- for recognizing a pedestrian crossing (14) of the street (2) in front of the first vehicle (1) and for transmitting respective information to the control unit (8),
wherein the control unit (8) is adapted
- for correlating the information received by the sensor (5, 6),
- for recognizing that the second vehicle (15) might obscure a pedestrian (4) on the detected pedestrian crossing (14) of the street (2) in front of the first vehicle (1),
- for generating a warning signal to a driver of the first vehicle (1), if the control unit (8) has recognized that the second vehicle (15) might obscure a pedestrian (4) on the detected pedestrian crossing (14) of the street (2) in front of the first vehicle (1).

2. Device (3) according to claim 1, wherein the control unit (8) is adapted for initiating a brake action of the first vehicle (1), if the control unit (8) has recognized that the second vehicle (15) might obscure a pedestrian (4) on the detected pedestrian crossing (14) of the street (2) in front of the first vehicle (1) .

3. Device (3) according to claim 1 or 2, wherein the sensor (5, 6) of the first vehicle (1) comprises a camera (5).

4. Device (3) according to claim 3, wherein the sensor (5, 6) of the first vehicle (1) further comprises a LiDAR element or radar element (6).

5. Device (3) according to one of the preceding claims, wherein the sensor (5, 6) is further adapted for detecting a pedestrian (4) who is crossing the street (2) in front of the first vehicle (1) and the control unit (8) is further adapted for extrapolating a future movement of the detected pedestrian (4) while the pedestrian (4) might be obscured by the second vehicle (15).

6. Vehicle (1) comprising a device (3) according to one of the preceding claims.

7. Method for a first vehicle according to claim 6 for recognizing a pedestrian (4), comprising the steps of:
(1) detecting and tracking a second vehicle (15) on a second lane (16) of a street (2) and transmitting respective information to the control unit (8) of the device (3) of the first vehicle (1), if the first vehicle (1) is driving on a first lane (12) of the street, wherein the first lane (12) runs adjacent to the second lane (16),
(2) recognizing a stopping action of the second vehicle (15) and transmitting respective information to the control unit (8),
(3) recognizing a pedestrian crossing (14) of the street (2) in front of the first vehicle (1) and for transmitting respective information to the control unit (8),
- correlating by use of the control unit (8) the information received in steps (1) to (3)
- recognizing by use of the control unit (8), that the second vehicle (15) might obscure a pedestrian (4) on the detected pedestrian crossing (14) of the street (2) in front of the first vehicle (1), and
- generating by use of the control unit (8) a warning signal to a driver of the first vehicle (1), if the control unit (8) has recognized that the second vehicle (15) might obscure a pedestrian (4) on the detected pedestrian crossing (14) of the street (2) in front of the first vehicle (1).

8. Method according to claim 7, further comprising the step of initiating a brake action of the first vehicle (1) by use of the control unit (8), if the control unit (8) has recognized that the second vehicle (1) might obscure a pedestrian (4) on the detected pedestrian crossing (14) of the street (2) in front of the first vehicle (1).

9. Method according to claim 7 or 8, further comprising the steps of
- detecting by use of the sensor (5, 6) a pedestrian (4) who is crossing the street (2) in front of the first vehicle (1) prior to the detection and tracking the second vehicle (15), and
- extrapolating a future movement of the detected pedestrian (4) while the pedestrian (4) might be obscured by the second vehicle (15) by use of the control unit (8).

## Patentansprüche

1. Vorrichtung (3) für ein Fahrzeug (1) zur Erkennung eines Fußgängers (4), umfassend:
- einen Sensor (5, 6) für ein erstes Fahrzeug (1) und
- eine Steuereinheit (8) für das erste Fahrzeug (1),
wobei der Sensor (5, 6) ausgelegt ist
- für das Erfassen und Verfolgen eines zweiten Fahrzeuges (15) auf einer zweiten Spur (16) einer Straße (2) und für das Übertragen von jeweiligen Informationen an die Steuereinheit (8), falls das erste Fahrzeug (1) auf einer ersten Spur (12) der Straße (2) fährt, wobei die erste Spur (12) benachbart zu der zweiten Spur (16) verläuft,
- für das Erkennen einer Halteaktion des zweiten Fahrzeuges (15) und für das Übertragen von jeweiligen Informationen an die Steuereinheit (8),
- für das Erkennen eines Fußgängerüberweges (14) der Straße (2) vor dem ersten Fahrzeug (1) und für das Übertragen von jeweiligen Informationen an die Steuereinheit (8),
wobei die Steuereinheit (8) ausgelegt ist
- für das Korrelieren der durch den Sensor (5, 6) empfangenen Informationen,
- für das Erkennen, dass das zweite Fahrzeug (15) einen Fußgänger (4) auf dem erfassten Fußgängerüberweg (14) der Straße (2) vor dem ersten Fahrzeug (1) verdecken könnte,
- für das Erzeugen eines Warnsignals an einen Fahrer des ersten Fahrzeuges (1), falls die Steuereinheit (8) erkannt hat, dass das zweite Fahrzeug (15) einen Fußgänger (4) auf dem erfassten Fußgängerüberweg (14) der Straße (2) vor dem ersten Fahrzeug (1) verdecken könnte.

2. Vorrichtung (3) nach Anspruch 1, wobei die Steuereinheit (8) angepasst ist für das Einleiten einer Bremsaktion des ersten Fahrzeuges (1), falls die Steuereinheit (8) erkannt hat, dass das zweite Fahrzeug (15) einen Fußgänger (4) auf dem erfassten Fußgängerüberweg (14) der Straße (2) vor dem ersten Fahrzeug (1) verdecken könnte.

3. Vorrichtung (3) nach Anspruch 1 oder 2, wobei der Sensor (5, 6) des ersten Fahrzeuges (1) eine Kamera (5) umfasst.

4. Vorrichtung (3) nach Anspruch 3, wobei der Sensor (5, 6) des ersten Fahrzeuges (1) ferner ein LiDAR-Element oder Radar-Element (6) umfasst.

5. Vorrichtung (3) nach einem der vorangehenden Ansprüche, wobei der Sensor (5, 6) ferner ausgelegt ist für das Erfassen eines Fußgängers (4), der die Straße (2) vor dem ersten Fahrzeug (1) überquert, und die Steuereinheit (8) ferner ausgelegt ist für das Extrapolieren einer zukünftigen Bewegung des erfassten Fußgängers (4), während der Fußgänger (4) durch das zweite Fahrzeug (15) verdeckt sein könnte.

6. Fahrzeug (1), umfassend eine Vorrichtung (3) nach einem der vorangehenden Ansprüche.

7. Verfahren für ein erstes Fahrzeug nach Anspruch 6 zur Erkennung eines Fußgängers (4), umfassend die folgenden Schritte:
(1) Erfassen und Verfolgen eines zweiten Fahrzeuges (15) auf einer zweiten Spur (16) einer Straße (2) und Übertragen von jeweiligen Informationen an die Steuereinheit (8) der Vorrichtung (3) des ersten Fahrzeuges (1), falls das erste Fahrzeug (1) auf einer ersten Spur (12) der Straße fährt, wobei die erste Spur (12) benachbart zu der zweiten Spur (16) verläuft,
(2) Erkennen einer Halteaktion des zweiten Fahrzeuges (15) und Übertragen von jeweiligen Informationen an die Steuereinheit (8),
(3) Erkennen eines Fußgängerüberweges (14) der Straße (2) vor dem ersten Fahrzeug (1) und Übertragen von jeweiligen Informationen an die Steuereinheit (8),
- Korrelieren, unter Verwendung der Steuereinheit (8), der in den Schritten (1) bis (3) empfangenen Informationen,
- Erkennen, unter Verwendung der Steuereinheit (8), dass das zweite Fahrzeug (15) einen Fußgänger (4) auf dem erfassten Fußgängerüberweg (14) der Straße (2) vor dem ersten Fahrzeug (1) verdecken könnte, und
- Erzeugen, unter Verwendung der Steuereinheit (8), eines Warnsignals an einen Fahrer des ersten Fahrzeuges (1), falls die Steuereinheit (8) erkannt hat, dass das zweite Fahrzeug (15) einen Fußgänger (4) auf dem erfassten Fußgängerüberweg (14) der Straße (2) vor dem ersten Fahrzeug (1) verdecken könnte.

8. Verfahren nach Anspruch 7, ferner umfassend den Schritt des Einleitens einer Bremsaktion des ersten Fahrzeuges (1) unter Verwendung der Steuereinheit (8), falls die Steuereinheit (8) erkannt hat, dass das zweite Fahrzeug (15) einen Fußgänger (4) auf dem erfassten Fußgängerüberweg (14) der Straße (2) vor dem ersten Fahrzeug (1) verdecken könnte.

9. Verfahren nach Anspruch 7 oder 8, ferner umfassend die Schritte des
- Erfassens, unter Verwendung des Sensors (5, 6), eines Fußgängers (4), der die Straße (2) vor dem ersten Fahrzeug (1) überquert, vor dem Erfassen und Verfolgen des zweiten Fahrzeuges (15) und
- Extrapolierens einer zukünftigen Bewegung des erfassten Fußgängers (4), während der Fußgänger (4) durch das zweite Fahrzeug (15) verdeckt sein könnte, unter Verwendung der Steuereinheit (8).

## Revendications

1. Dispositif (3) pour un véhicule (1) permettant de reconnaître un piéton (4) comprenant :
- un capteur (5, 6) pour un premier véhicule (1), et
- une unité de commande (8) pour le premier véhicule (1),
ledit capteur (5, 6) étant conçu
- pour détecter et suivre un deuxième véhicule (15) sur une deuxième voie (16) d'une rue (2) et pour transmettre des informations respectives à l'unité de commande (8) lorsque le premier véhicule (1) roule sur une première voie (12) de la rue (2), la première voie (12) s'étendant adjacente à la deuxième voie (16) ;
- pour reconnaître une action d'arrêt du deuxième véhicule (15) et pour transmettre des informations respectives à l'unité de commande (8) ;
- pour reconnaître un passage pour piétons (14) de la rue (2) devant le premier véhicule (1) et pour transmettre des informations respectives à l'unité de commande (8) ;
l'unité de commande (8) étant conçue
- pour corréler les informations reçues par le capteur (5, 6) ;
- pour reconnaître que le deuxième véhicule (15) peut cacher un piéton (4) sur le passage pour piétons (14) détecté de la rue (2) devant le premier véhicule (1) ;
- pour générer un signal d'avertissement destiné au conducteur du premier véhicule (1) lorsque l'unité de commande (8) a reconnu que le deuxième véhicule (15) peut cacher un piéton (4) sur le passage pour piétons (14) détecté de la rue (2) devant le premier véhicule (1).

2. Dispositif (3) selon la revendication 1, l'unité de commande (8) étant conçue pour déclencher une action de freinage du premier véhicule (1) lorsque l'unité de commande (8) a reconnu que le deuxième véhicule (15) peut cacher un piéton (4) sur le passage pour piétons (14) détecté de la rue (2) devant le premier véhicule (1).

3. Dispositif (3) selon la revendication 1 ou 2, le capteur (5, 6) du premier véhicule (1) comprenant une caméra (5).

4. Dispositif (3) selon la revendication 3, le capteur (5, 6) du premier véhicule (1) comprenant en outre un élément LiDAR ou un élément radar (6).

5. Dispositif (3) selon l'une quelconque des revendications précédentes, le capteur (5, 6) étant en outre conçu pour détecter un piéton (4), lequel traverse la rue (2) devant le premier véhicule (1) et l'unité de commande (8) étant en outre conçue pour extrapoler un mouvement futur du piéton (4) détecté lorsque le piéton (4) peut être caché par le deuxième véhicule (15).

6. Véhicule (1) comprenant un dispositif (3) selon l'une quelconque des revendications précédentes.

7. Procédé pour un premier véhicule (1) selon la revendication 6 permettant de reconnaître un piéton (4), comprenant les étapes consistant :
(1) à détecter et à suivre un deuxième véhicule (15) sur une deuxième voie (16) d'une rue (2) et à transmettre des informations respectives à l'unité de commande (8) du dispositif (3) du premier véhicule (1) lorsque le premier véhicule (1) roule sur une première voie (12) de la rue, la première voie (12) s'étendant adjacente à la deuxième voie (16) ;
(2) à reconnaître une action d'arrêt du deuxième véhicule (15) et à transmettre des informations respectives à l'unité de commande (8) ;
(3) à reconnaître un passage pour piétons (14) de la rue (2) devant le premier véhicule (1) et à transmettre des informations respectives à l'unité de commande (8) ;
- à corréler, à l'aide de l'unité de commande (8), les informations reçues dans les étapes (1) à (3) ;
- à reconnaître, à l'aide de l'unité de commande (8), que le deuxième véhicule (15) peut cacher un piéton (4) sur le passage pour piétons (14) détecté de la rue (2) devant le premier véhicule (1) ; et
- à générer, à l'aide de l'unité de commande (8), un signal d'avertissement destiné au conducteur du premier véhicule (1) lorsque l'unité de commande (8) a reconnu que le deuxième véhicule (15) peut cacher un piéton (4) sur le passage pour piétons (14) détecté de la rue (2) devant le premier véhicule (1) .

8. Procédé selon la revendication 7, comprenant en outre l'étape consistant à déclencher une action de freinage du premier véhicule (1) à l'aide de l'unité de commande (8) lorsque l'unité de commande (8) a reconnu que le deuxième véhicule (1) peut cacher un piéton (4) sur le passage pour piétons (14) détecté de la rue (2) devant le premier véhicule (1) .

9. Procédé selon la revendication 7 ou 8, comprenant en outre les étapes consistant
- à détecter, à l'aide du capteur (5, 6), un piéton (4), lequel traverse la rue (2) devant le premier véhicule (1), avant la détection et le suivi du deuxième véhicule (15) ; et
- à extrapoler un mouvement futur du piéton (4) détecté, lorsque le piéton (4) peut être caché par le deuxième véhicule (15), à l'aide de l'unité de commande (8).
